# EUROPEAN PATENT APPLICATION

(11) **EP 2 912 942 A1**
(43) Date of publication of application: **02.09.2015**
(21) Application number: 15154534.0
(22) Date of filing: 10.02.2015
(51) Int. Cl.: A01K 5/00, A01D 69/03, F16H 57/04

(54) **Mixer for feed**

(30) Priority: 11.02.2014 NL 2012242
(71) Applicant: Trioliet Holding B.V., 7575 BE Oldenzaal (NL)
(72) Inventor: Liet, Cornelis Hendricus, 7581 TJ Losser (NL)
(74) Representative: De Vries & Metman

(57) **Abstract**

Mixer (1, 1', 40) for feed, provided with at least one auger and at least one gearbox (8a, 8b, 9) with an input drive shaft (10) and an output shaft (16) for driving the auger. The mixer comprises means (29, 35, 41, 44), such as a fan, for generating an air flow along the gearbox. The gearbox can for instance comprise a right-angle gearbox with or more planetary reduction gearboxes.

## Description

The invention relates to a mixer for feed, provided with an auger.

Such a mixer is described for instance in EP 1 537 777 and can be used for collecting and mixing feed. To this end the mixer is usually provided with an auger with a vertical shaft, often provided with one or more spiral mixing blades. The mixer can for instance be made up of a wheeled diet feeder cart commonly pulled by a tractor, in which case the shaft of the auger can be driven by the tractor by way of a power take-off shaft. Alternatively, the mixer can be supported by standards and be driven by an external motor, usually an electric motor. Alternatively, the mixer can be a self-propelled and/or self-loading vehicle.

In the case of larger tractors and electric drives the input shaft is often driven at a speed of 1,000 rpm or higher. In diet feeder carts often gearboxes are used which are composed of a right-angle gearbox, usually connected to one, two or more planetary reduction gearboxes placed one behind the other, in order to reduce the speed to the speed desired for the auger, usually c. 40 rpm maximum. In order to control the temperature of the oil in these comparatively rapidly rotating gearboxes, the gearboxes are provided with an oil tank and a cooling radiator. Such a cooling system uses a lot of oil, as a result of which the maintenance costs are comparatively high.

The object of the invention is to provide a mixer for feed provided with a drive with a more favourable oil consumption and lower maintenance costs.

The object of the invention is attained with a mixer for feed, which mixer is provided with at least one auger and a gearbox with an input driving shaft and an output shaft for driving the auger. The mixer comprises means for generating an air flow along the gearbox.

In this process heat is dissipated by way of the oil by the air flow. It was found that by using such a combined air and oil cooling, oil consumption and maintenance costs are lowered substantially. The use of an oil tank, radiator, hoses and the like can be avoided. At an input speed of 1,000 rpm a lot of heat is generated, especially in the case of the right-angle gearing, where the speed is highest, and to a lesser degree in the planetary reduction gearboxes. It was found that so much heat is generated that the temperature of the lubricating oil used can rise to far above 90 degrees in the case of continuous use. In such a case the oil will age rapidly as a result of combustion and will no longer provide sufficient lubrication. The seals will also age quickly and the gearbox will suffer damage. With a system according to the invention excess heating of the oil is prevented in an economically advantageous manner, as a result of which it no longer has to be replaced or has to be replaced less frequently. A cooling radiator is no longer required and the maintenance costs are low.

These advantages are not attained using already familiar cooling systems where oil is circulated through the gearboxes by way of an oil pump, after which the oil is passed through a heat exchanger. In that process heat is dissipated with the aid of a fan. The cooled oil is then returned to the gearboxes. Such a system is relatively expensive as a result of the use of a pump with a suction filter, an oil tank and a fan. Such a system has a large oil capacity. Replacing the oil thus increases the maintenance costs. Surprisingly, it was found that an air flow along the right-angle gearbox itself has sufficient effect on the temperature and on the oil's keeping properties, with it being possible to use a simpler design which has lower maintenance costs.

The gearbox can for instance comprise one or more reduction gearboxes, with the input and output shafts being essentially parallel. Alternatively, the gearbox can comprise a right-angle gearbox, with the output shaft being a vertical shaft for driving the auger by way of one or more reduction gearboxes. The reduction gearboxes serve to further reduce the speed of the rotation of the output shaft and can for instance comprise one or more, say two, planetary reduction gearboxes. The air flow can be passed along these reduction gearboxes as well.

The means for generating an air flow can for instance comprise a fan on the underside of the right-angle gearbox. In that case the fan can be arranged such that the air flow along the right-angle gearbox is directed downwards. This prevents dirt from the environment or from the floor being sucked upwards in the direction of the gearbox or the reduction gearboxes. Alternatively, the air flow can be generated parallel to the horizontal shafts.

Oil for lubricating the right-angle reduction gearing can be circulated by way of an oil circuit which extends partly outside the right-angle gearbox and in the process crosses the range of the generated air flow. In the range of the air flow the circulated oil cools, which can then be returned to the gearing to be cooled. Such an oil circuit can for instance comprise a spiral line in the range between the right-angle gearbox and the fan.

The right-angle reductive gearing usually comprises a first conical gear mounted on the drive shaft and, mating with the first conical gear, a second conical gear which is mounted on the output shaft and meshes with the first conical gear which is at right angles to it. The section of the oil circuit extending outside the right-angle gearbox preferably connects to an opening in the gearbox near the mesh point of the two right-angle conical gears, more particularly at a point which - looking in the direction of rotation of the gears - is behind the mesh point of the conical gears. The right-angle reductive gearing has a driving, pumping action by which the oil can be driven by way of the said opening into the external part of the oil circuit. Because of this there is no need to use a pump and the oil can be circulated in an efficient manner.

For a still more efficient temperature control the device can be provided with one or more temperature sensors on one or more of the parts of the device which are under thermal load, and a control unit for controlling the means for generating an air flow on the basis of a signal generated by the sensor, or for triggering an alarm.

The means for generating an air flow can for instance be driven with the aid of an electric motor or with the aid of a mechanical drive.

The invention will be elucidated further with reference to the drawings.
- Figure 1:: is a cross-sectional representation of a diet feeder cart according to the invention connected to a tractor shown in side view;
- Figure 2:: is a representation in side view of an alternative, stationary mixer according to the invention;
- Figures 3a and b:: are representations in perspective of a drive of the mixer according to Figure 1 or Figure 2 according to the invention with and without a casing, respectively;
- Figure 4:: is a cross-sectional representation of the drive of Figure 1 or 2;
- Figure 5:: is a cross-sectional representation of an alternative potential drive;
- Figure 6:: is a representation in side view of a further alternative embodiment of a mixer accoring to the invention;
- Figure 7:: is a representation in rear view of the mixer of Figure 6.

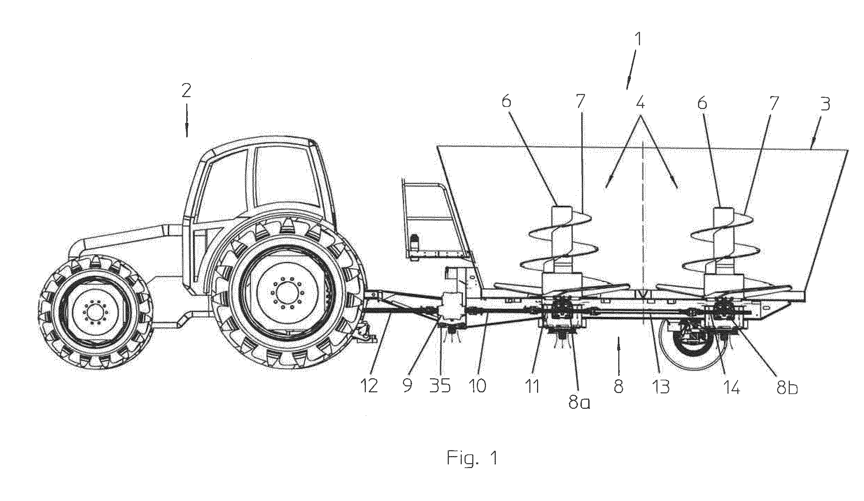

Figure 1 shows a diet feeder cart 1 for mixing feed connected to a tractor 2. The diet feeder cart 1 comprises a mixing bin 3 with in it two vertical augers 4, both equipped with a vertical augur column 6 with a spiral mixing ribbon 7. Other embodiments with a single auger 4 or with more than two augers 4 can also be used.

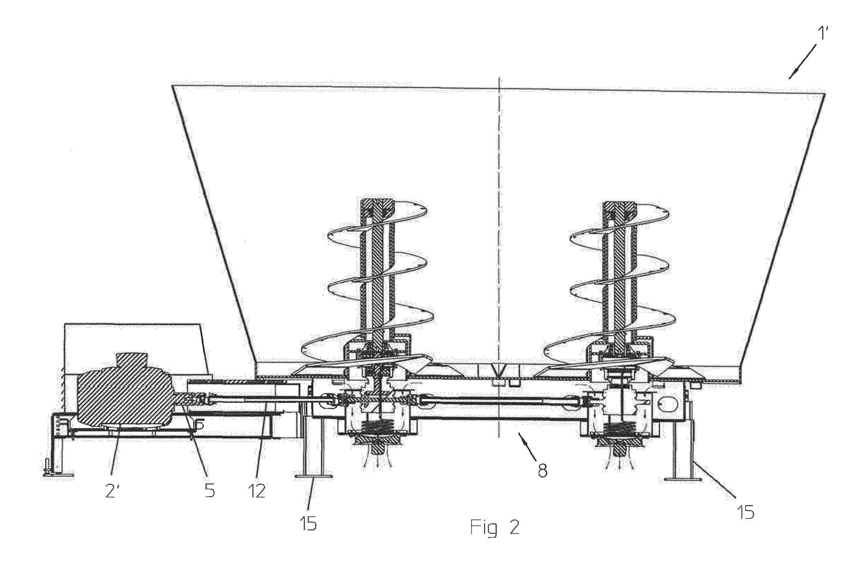

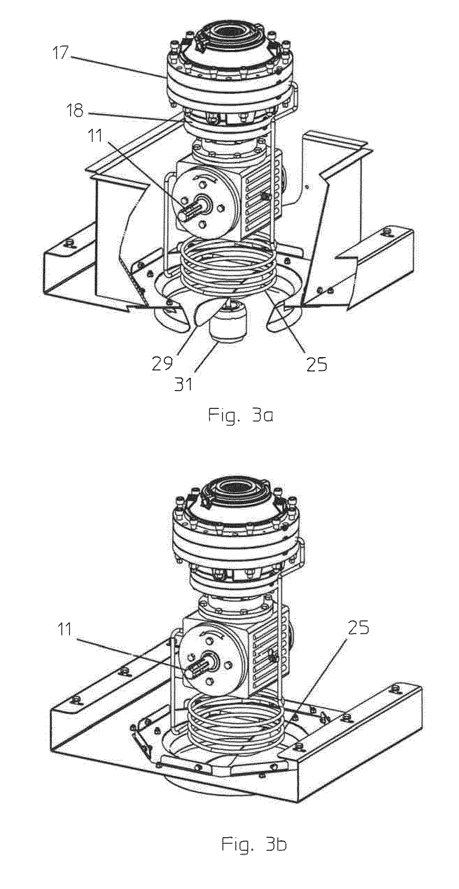

The front auger 4 is driven with the aid of a right-angle reduction gearing 8a shown in Figures 2 and 3. This gearing 8a comprises an essentially horizontal input drive shaft 10 with a first end that can be linked by way of a reduction gearbox 9 to an intermediate power take-off shaft 12, which is linked to the power take-off shaft of the tractor 2 (not shown) or a different external drive. A second end of the input shaft 10 is linked to a second intermediate power take-off shaft 13, which is linked to an input shaft 14 of a second right-angle reduction gearing 8b for driving the rear auger 4.

Figure 2 shows a mixer 1', which is not configured as a cart but is supported by standards 15. The mixer 1' is not connected to a tractor, but to an electric drive 2' with an output shaft 5. Otherwise the configuration embodiment is the same as that of Figure 1.

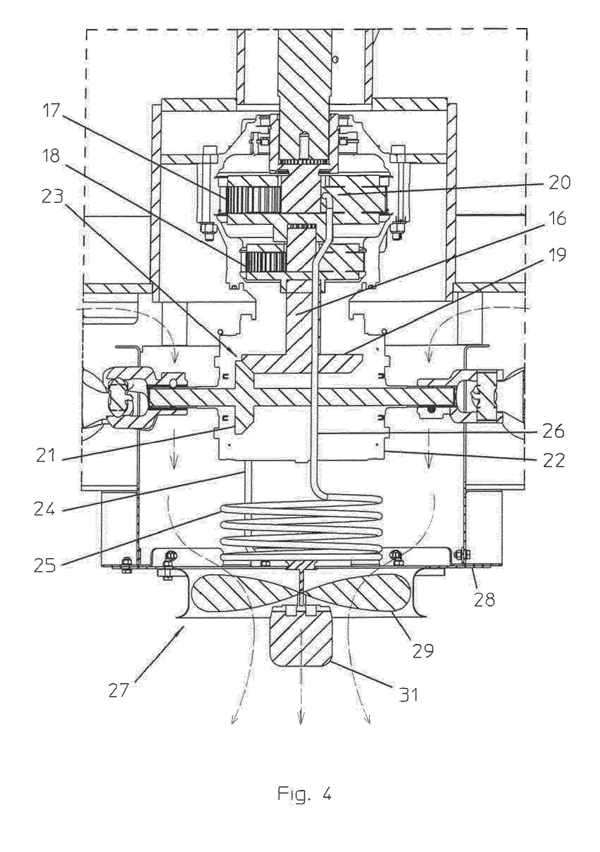

The right-angle reduction gearing 8a further comprises a vertical output shaft 16 (see Figure 4), which drives the auger column 6 of the auger 4 by way of two planetary gearboxes 17, 18. The bottom end of the vertical shaft 16 is provided with an integrally shaped conical gear 19, which mates with a conical gear 21 on the input drive shaft. The two conical gears 19, 21 form a right-angle gearing which is incorporated in a gearbox 22, where the input shaft 10 extends both at the front and at the rear side and where the vertical shaft 16 extends at the top of the gearbox 22 and forms the drive shaft for the two planetary gearboxes 17, 18 mounted above it one behind the other.

The right-angle reduction gearing 8 is lubricated with oil in the gearbox 22. Near the mesh point 23 of the two conical gears 19, 21 the oil is discharged by way of an outlet opening (not shown) with the aid of the driving action of the two meshing conical gears 19, 21. By way of, successively, a vertical oil line 24, a spiral circuit section 25 and a vertical line 26 the oil is returned to an oil inlet 20 in the area of the planetary gearboxes 17, 18, where the oil is returned once more to the gearbox 22. As a result of this a recirculation circuit for the oil is created. The spiral circuit section 25 is in line with an opening 27 in a base plate 28 of the diet feeder cart 1. In this opening 27 a fan 29 has been mounted, which is driven by an electric motor 30. When the fan 29 is in operation, it sucks in air. The air flow, indicated in the figure by the arrows, is directed downwards, so that air is guided along the gearbox 22 of the gearing 8. The gearbox 22 is cooled by this. The air flow also passes through the spiral section 25 of the oil circuit. This ensures that the oil in the circuit is properly cooled before it is passed back to the oil inlet 20 in the gearbox 22. This way a very effective combined air and oil cooling is obtained.

The reduction gearbox 9, of which the input shaft which connects to the intermediate power take-off shaft 12 is essentially parallel to the output shaft which connects to the drive shaft 10, is provided with a fan 35, which generates a downwards directed air flow.

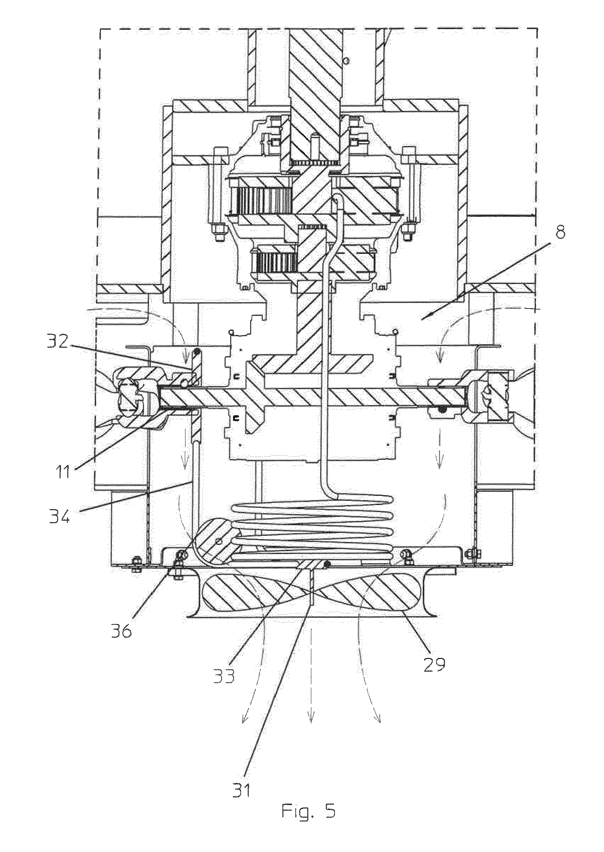

Figure 5 shows an alternative embodiment of the right-angle reduction gearing 8a, 8b which is equal to the embodiment of Figure 4, except for the drive of the fan 29. The fan 29 in this case is not driven by an electric motor but by a belt drive. In this case both the input shaft 10 and the rotor shaft 31 of the fan 29 comprise a pulley disc 32, 33 along which a belt 34 is guided by way of two parallel reverse pulleys 36. By way of the belt 34, the rotor shaft 31 of the fan 29 is rotatingly driven by the rotation of the input shaft 10.

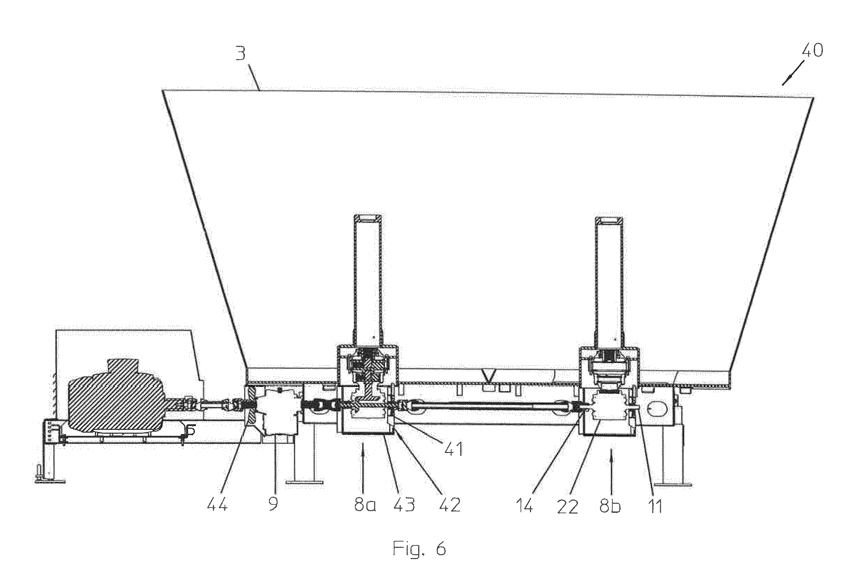

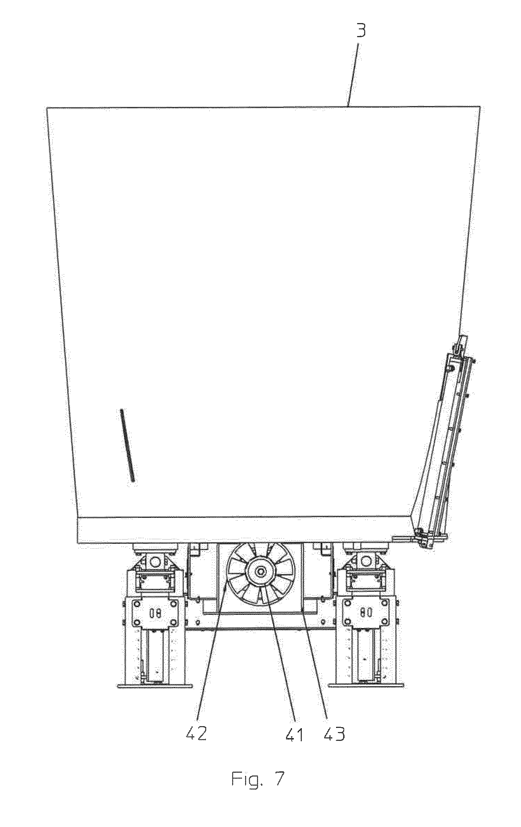

An alternative mixer 40 is shown in Figures 6 and 7. This mixer 40 also comprises a mixing bin 3. In the mixing bin 3 there are augers 4 (not shown) which are driven by way of two gearings 8 supported by standards 15. In this embodiment the input shaft 10 is provided with an impeller 41, which rotates with the shaft 10. As shown in Figure 8, the impeller 41 is mounted in an opening 42 in a casing 43 around the gearbox 22. The rotation of the impeller 41 makes the impeller 41 suck air by way of the opening 42 into the casing 43, where the air is guided along the gearbox casing 22, after which the air leaves the casing 43 again on the other side. The right-angle reduction gearing 8 of the second auger 4 can also be provided with such an impeller.

In this embodiment also the reduction gearbox 9 between the intermediate power take-off shaft 12 and the drive shaft 10 is provided with a fan 44, which in this embodiment is mounted on the input shaft of the reduction gearbox 9. The fan is arranged to generate an air flow along the outside of the reduction gearbox 9.

## Claims

1. Mixer (1, 1', 40) for feed, which mixer is provided with at least one auger and at least one gearbox (8a, 8b, 9) with an input drive shaft (10) and an output shaft (16) for driving the auger, which mixer comprises means (29, 35, 41, 44) for generating an air flow along the gearbox.

2. Mixer according to claim 1, wherein the gearbox comprises a right-angle gearbox, wherein the output shaft is a vertical shaft for driving the auger (6) by way of one or more reduction gearboxes (17, 18).

3. Mixer according to claim 2, wherein the means for generating an air flow are arranged to also guide the air flow along the one or more reduction gearboxes (17, 18).

4. Mixer according to claim 1, wherein in the case of at least one of the one or more gearboxes the input and output shafts are essentially parallel.

5. Mixer according to claim 2, 3 or 4, wherein the gearboxes comprise one, two or more planetary reduction gearboxes (17, 18).

6. Mixer according to any one of the preceding claims, wherein the means for generating an air flow comprise a fan (29, 35) on the underside of the gearbox (8a, 8b, 9), wherein the fan is arranged such that the air flow along the gearbox is directed downwards.

7. Mixer according to any one of the preceding claims, wherein the gearbox (8a, 8b) is lubricated or cooled with oil which circulates by way of an oil circuit (24, 25, 26) which extends at least in part outside the gearbox and in the process crosses the range of the generated air flow.

8. Mixer according to claim 7, wherein the oil circuit comprises a spiral line (25) in the range between the gearbox (8a, 8b) and the fan (29).

9. Mixer according to claim 8, wherein the section of the oil circuit outside the gearbox (8a, 8b) connects to an opening in the gearbox near the mesh point of two right-angle conical gears (19, 21).

10. Mixer according to any one of the preceding claims comprising one or more temperature sensors on one or more of the parts under thermal load (17, 18, 22) of the gearbox (8a, 8b), and a control unit for controlling the means (29) for generating an air flow on the basis of a signal generated by the sensor and/or for an alarm.

11. Mixer according to any one of the preceding claims, wherein the means for generating an air flow are driven with the aid of an electric motor (30) or with the aid of a mechanical drive (32, 33, 34).

12. Mixer according to claim 11, wherein the mechanical drive comprises a belt (34) which with the aid of reverse gears (36) is guided around a first pulley (32) on the drive shaft (10) and around a second pulley (33) on a rotor shaft (31) of the fan (29).

13. Mixer according to any one of the preceding claims, wherein the means for generating an air flow comprise an impeller (41) mounted on the input drive shaft (10).

14. Mixer according to any one of the preceding claims wherein the mixer is a wheeled diet feeder cart, wherein the input drive shaft (10) of the gearbox (8a, 8b, 9) is provided with a connection (11) for a power take-off shaft sytem of a tractor (2).
